# EUROPÄISCHE PATENTSCHRIFT

(11) **EP 1 788 046 B1**
(45) Veröffentlichungstag und Bekanntmachung des Hinweises auf die Patenterteilung: **16.07.2008**
(21) Anmeldenummer: 06022114.0
(22) Anmeldetag: 21.10.2006
(51) Int. Cl.: C09D 13/00

(54) **Mine für Schreib-,Zeichen oder Malgeräte**
Lead for writing-, drawing- or painting instruments
Mine pour instruments d'écriture, de dessin ou de peinture

(30) Priorität: 19.11.2005 DE 102005055193
(43) Veröffentlichungstag der Anmeldung: 23.05.2007
(73) Patentinhaber: J.S. Staedtler GmbH & Co KG, 90427 Nürnberg (DE)
(72) Erfinder: Lehrer, Christa, 92318 Neumarkt (DE); Validzic, Zivko, 90408 Nürnberg (DE)

(56) Entgegenhaltungen:
- EP-A2- 0 573 000
- DE-T0- 19 983 886
- US-A1- 2003 000 420
- DATABASE WPI Week 200423 Derwent Publications Ltd., London, GB; AN 2004-241938 XP002411355 & JP 2003 261812 A (MITSUBISHI PENCIL CO LTD) 19. September 2003 (2003-09-19)

## Beschreibung

Die Erfindung betrifft Minen für Schreib-, Zeichen- oder Malgeräte, die nach ihrer Herstellung imprägniert werden.

Derartige Minen zum Schreiben, Zeichnen und/oder Malen sind prinzipiell bekannt.

Aus der DE-AS 1 243 305 ist eine Formmasse zur Herstellung von gebrannten Bleistiftminen auf der Grundlage von Ton und Graphit bekannt. Die formbare Masse wird konzentriert und zu Bleistiftminen gepresst, getrocknet, gebrannt und anschließend in Wachs getaucht.

Weiter ist aus der JP-P/AS 55-18271 ein Prozess zur Herstellung von gebrannten Minen bekannt. Die gebrannten Minen werden in ein Bad von flüssigem Paraffin eingetaucht und anschließend einem Unterdruck in Öl ausgesetzt.

Nachteilig bei dieser Art von Minen ist es, dass Minen, die mit Wachsen und/oder Ölen imprägniert sind, eine begrenzte Schwärze des Abstrichs aufweisen und zudem eine mangelnde Gleitfähigkeit der Mine auf dem Substrat festzustellen ist.

In der US 2003/000420 A1 wird eine in einer Umhüllung unverschiebbar gehalterte gebrannte Farbmine beschrieben, wobei bei deren Herstellung ein poröser Grundkörper mit siloxanhaltigem Filler getränkt und anschließend gebrannt wird.

Aus EP 0 573 000 B1 ist eine ungebrannte Farb- oder Buntmine bekannt, deren offene Poren mit einem Öl, Fett und/oder Wachs imprägniert sind.

**Aufgabe** der Erfindung ist es daher, eine Mine zum Schreiben, Zeichnen oder Malen zu schaffen, die die genannten Nachteile nicht aufweist und wobei sich der Abstrich durch einen hohen Farbdeckungs- oder Schwärzungsgrad auszeichnet und die imprägnierte Mine auf dem Schreibmedium eine gute Gleitfähigkeit aufweist, die dem Benutzer ein angenehm leichtes und gleitendes sowie kratz- und geräuschfreies Schreibgefühl vermittelt.

Diese Aufgabe wird mit den kennzeichnenden Merkmalen gemäß Anspruch 1 gelöst. Vorteilhafte Ausgestaltungen ergeben sich aus den untergeordneten Ansprüchen.

Unter Bleiminen zum Schreiben, Zeichnen oder Malen versteht man einerseits Minen, die fest in Holz oder andere spitzbare Materialien eingebracht werden und andererseits Minen, die verschiebbar in einer biegesteifen Hülle gehaltert sind. Beispiele hierfür sind holzgefasste Bleistifte, Feinminen für mechanische Stifte, sogenannte Druckbleistifte und Minen für Fallstifte. Dabei weisen die Minen üblicherweise Außendurchmesser im Bereich von etwa 0,3 mm bis 6 mm auf. Bei den Minen handelt es sich vorzugsweise um gebrannte Minen. Angeführt seien auch Sonderminen, wie beispielsweise Minen für sogenannte Zimmermannsstifte.

Die erfindungsgemäße Imprägnierung von Minen beschränkt sich aber nicht ausschließlich auf gebrannte Minen, sondern kann ebenso bei ungebrannten Minentypen, wie beispielsweise Buntminen für holzgefasste Stifte oder bunte Feinminen eingesetzt werden.

Die erfindungsgemäßen Minen zeichnen sich dadurch aus, dass sie mit organisch modifizierten Siloxanen, insbesondere Polyethersiloxan und/oder Polyethersiloxan-Copolymeren imprägniert sind.

Der Abstrich erfindungsgemäß imprägnierter Minen zeichnet sich durch Gleichmäßigkeit, d.h. augenscheinlich ohne Farbschwankungen, besonders hohe Gleitfähigkeit und gesteigerte Farbtiefe oder Schwärze aus.

Die zu imprägnierenden Minen können beispielsweise wie in DE 38 35 241 C2 beschrieben hergestellt werden.
Dabei ist es unerheblich, ob es sich um Vollminen, Mantelminen oder Rohrminen handelt.
Die Imprägnierung von Rohrminen, welche in Richtung ihrer Längsachse einen Hohlraum aufweisen, birgt zudem den Vorteil in sich, dass die imprägnierte Oberfläche vergrößert ist, wodurch sich der Effekt der verbesserten Gleitfähigkeit noch verstärkt.

Die Imprägnierung von Minen mit Polyethersiloxan-Copolymeren kann beispielsweise durch Tauchen oder Besprühen erfolgen. Im Falle des Tauchens hat sich eine Einwirkdauer von 24 Stunden bei erhöhter Temperatur im Bereich von 50 bis 100°C als vorteilhaft herausgestellt, um die offenen Poren nahezu vollständig zu füllen.
Hierbei ist anzumerken, dass die Dauer der Imprägnierung von der Viskosität des Imprägnierungsmittels beeinflusst werden kann.
Das Imprägnierungsmittel kann rein aus organisch modifizierten Siloxanen bestehen oder als eine Mischung mit Ölen, Wachsen, Lösungsmitteln und/oder weiteren Zusätzen vorliegen.

In der nachfolgenden Tabelle wird die Verbesserung des Schwärzungsgrades der erfindungsgemäß imprägnierten Mine gegenüber konventionell imprägnierten Minen dargestellt. Je höher der gemessene Wert, desto geringer die Schwärze des Abstrichs.

**Tabelle:**

| | Graphitmine 05-HB, Erfindung | Graphitmine 05-HB, St.d.Technik | Graphitmine 05-B, Erfindung | Graphitmine 05-B, St.d.Technik |
|---|---|---|---|---|
| Schwärze des Abstrichs; 1-Wert | 51,5 | 54,4 | 42,5 | 46,6 |
| Verbesserung der Schwärze in % | **5,60** | | **9,00** | |

Hierbei ist deutlich zu erkennen, dass Minen welche entsprechend der erfinderischen Lösung ausgebildet sind einen um 5,6 bzw. 9,0 % höheren Schwärzegrad aufweisen, wie Minen, welche nach dem Stand der Technik hergestellt und mit Silikonöl imprägniert sind.

Die Werte der gemessenen Schwärze des Abstrichs sind L-Werte im sogenannten L,a,b-Farbmesssystem. Die Abstriche der Minen wurden bei einem Auflagedruck von 200 g auf Prüfpapier der Kategorie 80g/m² erzeugt.

Die L,a,b-Farbmessmethode nach Hunter positioniert die Farbprobe in einem Raum, der durch die Position entlang dreier Achsen definiert wird. "L"-Achse für Helligkeit/Dunkelheit "a"-Achse für Rotfärbung/Grünfärbung "b"-Achse für Gelbfärbung/Blaufärbung Die relative Farbe zweier Proben kann aufgrund ihrer unterschiedlichen Positionen entlang der L-, a- und b-Differenzen beschrieben werden.

Die nachfolgende Darstellung zeigt Aufzeichnungen, welche mit einem sog. MiniTec-Aufzeichnungsgerät erstellt wurden um den Unterschied zwischen Minen nach dem Stand der Technik und erfindungsgemäßen Minen zu visualisieren. Aus diesen Aufzeichnungen ist der höhere Schwärzungsgrad des Abstrichs einer erfindungsgemäß imprägnierten Mine gegenüber einer Mine nach dem Stand der Technik deutlich erkennbar. MiniTec-Geräte sind dem Fachmann ein Begriff, wenn es um automatisierte Versuche zur Schreiblängenbestimmung geht.

Darstellung: MiniTec-Aufzeichnung der erfindungsgemäßen Lösung (links) und einer Aufzeichnung nach dem Stand der Technik (rechts);

Diese modifizierten Siloxane leiten sich von niedermolekularen Polymethylsiloxanen dadurch ab, dass einzelne Methylgruppen durch verschiedenste organische Reste ersetzt sind. Bei diesen Resten kann es sich z.B. um Polyether, Polyester oder langkettige Alkylreste handeln.

Die Erfindung betrifft eine Mine für Schreib-, Zeichen- und Malgeräte, wobei die Mine mit einem Imprägnierungsmittel behandelt ist, wobei das Imprägnierungsmittel mindestens ein organisch modifiziertes Siloxan aufweist. Das organisch modifizierte Siloxan ist ein Polyethersiloxan und/oder Polyethersiloxan-Copolymer. Das Imprägnierungsmittel kann als eine Mischung von Ölen, Wachsen, Lösungsmitteln und/oder weiteren Zusätzen mit einem organisch modifizierten Siloxan vorliegen.
Bei den imprägnierten Minen handelt es sich um gebrannte und/oder ungebrannte Minen.

## Patentansprüche

1. **Mine** für Schreib-, Zeichen- und Malgeräte, wobei die Mine mit einem Imprägnierungsmittel behandelt ist, **dadurch gekennzeichnet,**
**dass** das Imprägnierungsmittel ein organisch modifiziertes Siloxan ist
**oder dass** das Imprägnierungsmittel mindestens ein organisch modifiziertes Siloxan aufweist
**und dass** das organisch modifizierte Siloxan ein Polyethersiloxan und/oder Polyethersiloxan-Copolymer ist.

2. **Mine** nach Anspruch 1,
**dadurch gekennzeichnet,**
**dass** das Imprägnierungsmittel eine Mischung von Ölen, Wachsen und/oder Lösungsmitteln mit einem organisch modifizierten Siloxan ist.

3. **Mine** nach Anspruch 1 oder 2,
**dadurch gekennzeichnet,**
**dass** die Mine gebrannt ist.

4. **Mine** nach Anspruch 1 oder 2,
**dadurch gekennzeichnet,**
**dass** die Mine ungebrannt ist.

5. **Mine** nach einem der vorstehenden Ansprüche,
**dadurch gekennzeichnet,**
**dass** die Mine gebrannt ist.

6. **Mine** nach einem der vorstehenden Ansprüche,
**dadurch gekennzeichnet,**
**dass** die Mine ungebrannt ist.

## Claims

1. Refill for writing, drawing and marking instrument, wherein the refill is treated with an impregnating agent, **characterised in that** the impregnating agent is an organic modified siloxane or that the impregnating agent comprises at least one organic modified siloxane and that the organic modified siloxane is a polyethersiloxane and/or polyethersiloxane copolymer.

2. Refill according to claim 1, **characterised in that** the impregnating agent is a mixture of oils, waxes and/or solvents with an organic modified siloxane.

3. Refill according to claim 1 or 2, **characterised in that** the refill is fired.

4. Refill according to claim 1 or 2, **characterised in that** the refill is unfired.

5. Refill according to one of the preceding claims, **characterised in that** the refill is fired.

6. Refill according to one of the preceding claims, **characterised in that** the refill is unfired.

## Revendications

1. Mine pour instruments d'écriture, de dessin et de peinture, la mine étant traitée avec un agent d'imprégnation, **caractérisée en ce que**
l'agent d'imprégnation est un siloxane modifié organiquement
ou que l'agent d'imprégnation présente au moins un siloxane modifié organiquement
et que le siloxane modifié organiquement est un polyéthersiloxane et/ou un copolymère de polyéthersiloxane.

2. Mine selon la revendication 1,
**caractérisée en ce que**
l'agent d'imprégnation est un mélange d'huiles, de cires et/ou de solvants et d'un siloxane modifié organiquement.

3. Mine selon la revendication 1 ou 2,
**caractérisée en ce que**
la mine est calcinée.

4. Mine selon la revendication 1 ou 2,
**caractérisée en ce que**
la mine est non calcinée.

5. Mine selon l'une quelconque des revendications précédentes,
**caractérisée en ce que**
la mine est calcinée.

6. Mine selon l'une quelconque des revendications précédentes,
**caractérisée en ce que**
la mine est non calcinée.
